# EUROPEAN PATENT APPLICATION

(11) **EP 1 339 050 A1**
(43) Date of publication of application: **27.08.2003**
(21) Application number: 01976750.8
(22) Date of filing: 18.10.2001
(51) Int. Cl.: G11B 7/007, G11B 7/005, G11B 20/12, G11B 20/14

(54) **OPTICAL DISK MEDIUM AND SIGNAL REPRODUCTION METHOD**

(30) Priority: 19.10.2000 JP 2000319009; 14.12.2000 JP 2000379917
(71) Applicant: Matsushita Electric Industrial Co., Ltd., Kadoma-shi, Osaka 571-8501 (JP)
(72) Inventor: FURUMIYA, Shigeru, Himeji-shi, Hyogo 670-0083 (JP); NAKAMURA, Atsushi, Kadoma-shi, Osaka 571-0064 (JP); ISHIBASHI, Hiromichi, Ibaraki-shi, Osaka 567-0876 (JP); ISHIDA, Takashi, Yawata-shi, Kyoto 614-8331 (JP)
(74) Representative: Grünecker, Kinkeldey, Stockmair & Schwanhäusser Anwaltssozietät
(86) International application number: JP0109164
(87) International publication number: WO02033699

(57) **Abstract**

An optical disc medium according to the present invention includes at least one zone on which multiple track grooves are formed in a CAV format. Each of the track grooves has a wobbling structure made up of a fundamental wave having a single period. Information is recorded on the wobbling structure. In the at least one zone, the fundamental waves that make up the respective wobbling structures of mutually adjacent ones of the track grooves always have their phases shifted from each other by 90 degrees. As a result, the information recorded on the wobbling structure can be detected without being affected by crosstalk.

## Description

### TECHNICAL FIELD

The present invention relates to an optical disc medium on which information is recorded by changing the wobble shape of its grooves and also relates to a signal reading method for detecting the information from the optical disc medium.

### BACKGROUND ART

As a method of storing positional information (addresses) on the recording tracks of a general-purpose rewritable optical disc, a technique of wobbling its track grooves on which a signal should be recorded (which will be referred to herein as "grooves") so that the addresses are stored thereon through changes in wobble frequency, phase or amplitude, for example, is known. Each of the wobbled grooves has side faces that are displaced periodically along the groove.

On the other hand, the present inventors researched and developed an optical disc medium that can record auxiliary-information (e.g., positional information) thereon more efficiently by wobbling the grooves of an optical disc, providing discontinued or deformed portions for the wobbled grooves, and by giving two or more meanings to each of those discontinued or deformed portions. See Japanese Patent Applications No. 2000-6593 and No. 2000-187259 (which corresponds to PCT International Publication No. WO 01/52250 and which is hereby incorporated by reference), for example.

It should be noted that the wobbled groove structure will be herein sometimes referred to as a "wobbling structure". The wobbling structure is made of a fundamental wave having a single period. By locally modulating the frequency, phase or amplitude of the fundamental wave or by locally changing the shape of the fundamental wave, auxiliary-information may be recorded on the wobbling structure. The period of the fundamental wave will be herein sometimes referred to as a "wobbling period".

Methods of writing and reading information on/from an optical disc are roughly classifiable into constant linear velocity (CLV) method and constant angular velocity (CAV) method, for which an optical disc medium should be formatted differently. An optical disc medium is herein supposed to be compliant with a CAV format unless stated otherwise. Accordingly, the fundamental wave that makes up the wobbling structure is herein supposed to have a single period both in CAV read and write operations.

In the structures to be described below and disclosed in the aforementioned applications, the fundamental wave having the single period may be a sine wave, for example, and address information is recorded thereon by locally changing the shape of the fundamental wave.

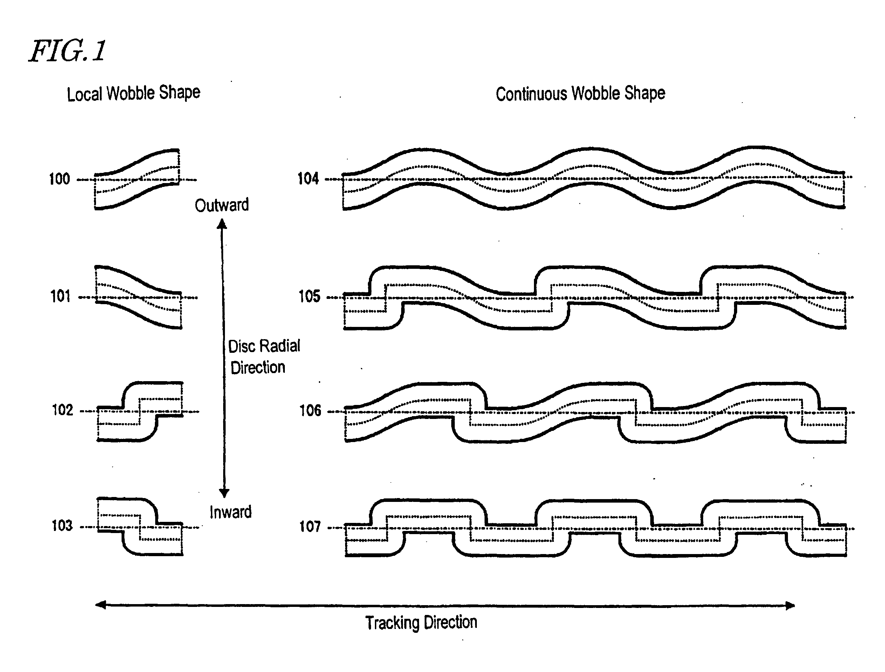

An address information recording method as proposed in the aforementioned applications will be described with reference to FIG. **1**. Each part of the wobbling structure on which address information is recorded is a combination of smooth sine wave portions **100** and **101**, a rectangular portion **102** with a steep disc-outward displacement and a rectangular portion **103** with a steep disc-inward displacement. The reference point defining one period of the wobbling structure (which will be also referred to as a "wobbling waveform"), i.e., a point having a phase angle of zero degrees, is supposed to be a point defining the maximum amplitude (that may be located on either the outward side or the inward side and that corresponds to the antinode of a sine wave) as shown in FIG. **1**. It is convenient to represent the wobbling structure as a combination of local waveforms (or portions), each including an intersection between the centerline curve of the groove (as indicated by the dotted line in FIG. **1**) and the average centerline thereof (as indicated by the one-dot chain in FIG. **1**) and corresponding to a half period of the fundamental wave.

By combining the four types of local waveforms shown in FIG. 1, at least four types of continuous wobble shapes (which will be referred to herein as "fundamental wobble patterns") can be formed. The fundamental wobble patterns include: sine wave wobble pattern **104** with no rectangular portions; rectangular wobble pattern **105** with inward displacements; rectangular wobble pattern **106** with outward displacements; and rectangular wobble pattern **107** with inner- and outward displacements.

The fundamental wobble patterns shown in FIG. **1** each include part of the fundamental wave corresponding to about three periods thereof. However, the number of the fundamental wave periods that make up each fundamental wobble pattern is not limited thereto.

For example, if codes "B", "S", "0" and "1" are allocated to each of these four types of fundamental wobble patterns on the basis of a predetermined unit section of the grooves in the tracking direction, then block information (B), synchronization information (S), address number and its error detection code (0 or 1) can be recorded.

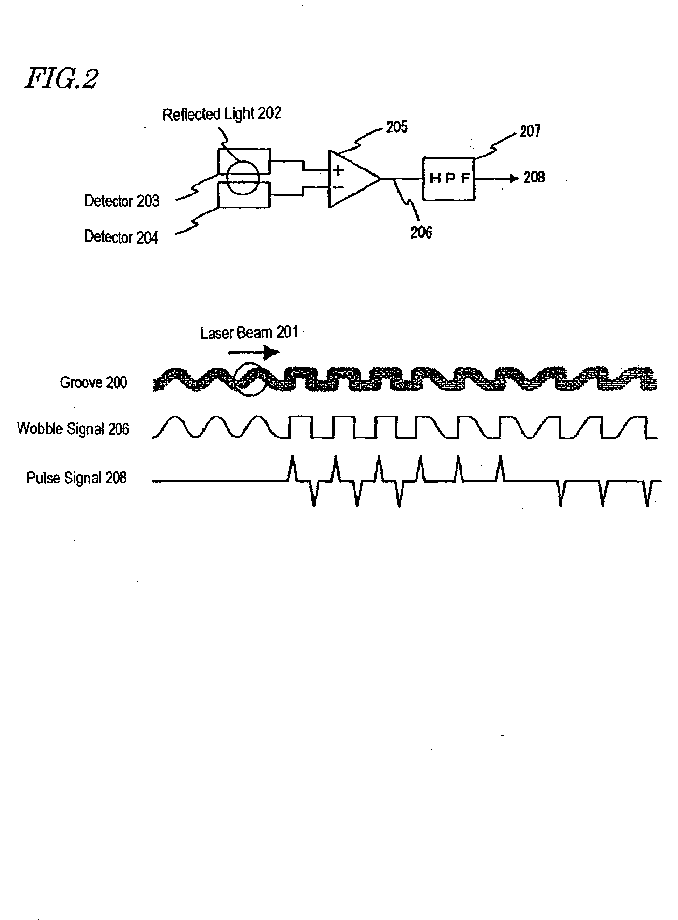

Next, it will be described with reference to FIG. **2** how to read the auxiliary-information that has been recorded on the wobbling structure.

A reflected part **202** of a laser beam **201** that has been irradiated onto a groove **200** is received at detectors **203** and **204** that are spaced apart from each other in the radial direction of the optical disc. When the intensities of the reflected light that has been received at the detectors **203** and **204** are subtracted from each other at a differential amplifier **205**, a wobble signal **206**, representing the shapes of the wobbling structure at respective positions thereof, can be obtained. Next, when the wobble signal **206** thus obtained is differentiated by a high-pass filter (HPF) **207**, signal components corresponding to sine wave portions with a smooth waveform are removed and instead only signal components corresponding to rectangular portions with steep gradients are detected as pulses **208** with positive and negative polarities. That is to say, smooth fundamental wave (sine wave) components having a single period are removed. Instead, only signal components, corresponding to high-frequency components superposed on the fundamental wave (i.e., steep gradients), are detected as a signal having two mutually different polarities that correspond to the two directions of displacement (i.e., outer- and inward displacements). More specifically, a signal component corresponding to the local waveform **102** shown in FIG. **1** is detected as an upward (positive) pulse, while a signal component corresponding to the local waveform **103** shown in FIG. **1** is detected as a downward (negative) pulse. In this manner, information, which has been recorded as the shape of a local waveform including an intersection between the centerline (dotted line) of the groove and the centerline (one-dot chain) of each track, is read out.

However, if an optical disc medium of this type, including spiral grooves on which auxiliary-information is recorded as a wobbling structure, has its track pitch further narrowed to cope with the demand for high density, then crosstalk should occur between adjacent grooves during a read operation. Once the crosstalk has been created, a wobble signal representing one groove and a wobble signal representing another adjacent groove should affect each other to increase or decrease their intensities. As a result, the wobble signals would have inconstant and fluctuating amplitude. Such fluctuation of the wobble signals is one of the factors contributing to unwanted increase in jitter while a clock signal is generated from the wobble signal.

Furthermore, even in the fundamental wobble patterns on which the address information is recorded, crosstalk should also occur between adjacent grooves. Accordingly, in the example described above, pseudo pulses are generated in addition to the original ones, thus increasing the detection error rate of the address information disadvantageously.

Such a problem is not unique to the illustrated format for recording the auxiliary-information by locally changing the wobble waveform, but is commonly found in any format for recording auxiliary-information by modulating the frequency, amplitude or phase of the fundamental wave.

### DISCLOSURE OF INVENTION

In order to overcome the problems described above, the present invention provides (1) an optical disc medium that can stabilize the amplitude of a wobble signal even if crosstalk should occur on the disc medium for which a narrow track pitch format is adopted and that can detect the information recorded on its wobbling structure (e.g., address information) without being affected by the crosstalk and (2) a signal reading method for reading the information that has been recorded on the wobbling structure of such an optical disc medium.

An optical disc medium according to the present invention includes at least one zone on which multiple track grooves are formed in a CAV format. Each of the track grooves has a wobbling structure made up of a fundamental wave having a single period. Information is recorded on the wobbling structure. In the at least one zone, the fundamental waves that make up the respective wobbling structures of mutually adjacent ones of the track grooves always have their phases shifted from each other by 90 degrees.

The wobbling structure is preferably made up of a number N+1/4 (where N is a positive integer) periods of the fundamental wave for one revolution of the disc.

The wobbling structure is preferably a combination of a first shape corresponding to the fundamental wave and a second shape corresponding to a wave obtained by superposing high-frequency components on the fundamental wave.

In a preferred embodiment, the first shape is a sine waveform and the second shape is a rectangular waveform.

The wobbling structure may also be a combination of a first shape corresponding to the fundamental wave and a second shape obtained by modulating the phase of the first shape.

In a preferred embodiment, the first shape is a sine waveform and the second shape is a waveform obtained by inverting the phase of the first shape by 180 degrees.

Another optical disc medium according to the present invention is an optical disc medium on which spiral track grooves have been formed so as to have wobbles in a disc radial direction with a constant period and on which information is recorded as the shapes of the wobbles. In at least one zone thereof including a predetermined number of track grooves, the wobbles of mutually adjacent ones of the track grooves always have their phases shifted from each other by 90 degrees.

In one embodiment, the wobble shape is a combination of a sine waveform portion, a first rectangular portion having a steep disc-inward displacement, and a second rectangular portion having a steep disc-outward displacement, thereby recording positional information thereon.

Alternatively, the wobble shape may also be a combination of a first sine waveform portion having a predetermined phase and a second sine waveform portion obtained by inverting the predetermined phase of the first sine waveform portion, thereby recording positional information thereon.

Still another optical disc medium according to the present invention includes at least one zone on which multiple track grooves are formed in a CAV format. Each of the track grooves has a wobbling structure made up of a fundamental wave having a single period. Information is recorded on the wobbling structure. The wobbling structure is a combination of a first shape corresponding to the fundamental wave and a second shape corresponding to a wave obtained by superposing high-frequency components on the fundamental wave. The fundamental wave that makes up the wobbling structure has an odd number of periods for one revolution of the disc. In the at least one zone, the fundamental waves that make up the respective wobbling structures of mutually adjacent ones of the track grooves have their phases matched with each other but include the second shape at respective periodic positions that are shifted from each other by one period.

In one embodiment, the first shape is a sine waveform and the second shape is a rectangular waveform.

Yet another optical disc medium according to the present invention is an optical disc medium on which spiral track grooves have been formed so as to have wobbles in a disc radial direction with a constant period. The wobble shape is a combination of a sine waveform portion, a first rectangular portion having a steep disc-inward displacement and a second rectangular portion having a steep disc-outward displacement, thereby recording positional information thereon. In at least one zone thereof including a predetermined number of track grooves, the wobbles of mutually adjacent ones of the track grooves have their phases matched with each other, but include the first or second rectangular portion at respective periodic positions that are shifted from each other by one period.

A signal reading method according to the present invention is a method for reading out information from an optical disc medium including at least one zone on which multiple track grooves are formed in a CAV format. Each of the track grooves has a wobbling structure made up of a fundamental wave having a single period. The information is recorded on the wobbling structure. The wobbling structure is a combination of a first shape corresponding to the fundamental wave and a second shape corresponding to a wave obtained by superposing high-frequency components on the fundamental wave. In the at least one zone, the fundamental waves that make up the respective wobbling structures of mutually adjacent ones of the track grooves always have their phases shifted from each other by 90 degrees. The method includes the steps of: irradiating the track grooves with a laser beam; getting light that has been reflected from the optical disc medium detected differentially by a pair of detectors that are spaced apart from each other in a disc radial direction; generating a sine wave wobble signal by limiting the band width of the differentially detected signals; generating a gate signal with a predetermined width at a zero crossing point of the sine wave wobble signal; generating a pulse signal from the second shape by differentiating the differentially detected signals; and selectively detecting the pulse signal in an interval corresponding to the predetermined width of the gate signal.

Another signal reading method according to the present invention is a method for reading out information stored from an optical disc medium including at least one zone on which multiple track grooves are formed in a CAV format. Each of the track grooves has a wobbling structure made up of a fundamental wave having a single period. The information is recorded on the wobbling structure. The wobbling structure is a combination of a first shape corresponding to the fundamental wave and a second shape corresponding to a wave obtained by superposing high-frequency components on the fundamental wave. The fundamental wave that makes up the wobbling structure has an odd number of periods for one revolution of the disc. In the at least one zone, the fundamental waves that make up the respective wobbling structures of mutually adjacent ones of the track grooves have their phases matched with each other but include the second shape at respective periodic positions that are shifted from each other by one period. The method includes the steps of: irradiating the track grooves with a laser beam; getting light that has been reflected from the optical disc medium detected differentially by a pair of detectors that are spaced apart from each other in a disc radial direction; generating a sine wave wobble signal by limiting the band width of the differentially detected signals; generating a gate signal with a predetermined width every other period of the sine wave wobble signal; generating a pulse signal from the second shape by differentiating the differentially detected signals; and selectively detecting the pulse signal in an interval corresponding to the predetermined width of the gate signal.

### BRIEF DESCRIPTION OF DRAWINGS

FIG. **1** schematically illustrates wobble local waveforms and continuous wobble shapes (fundamental wobble patterns) each made up of those local waveforms.
FIG. **2** is a schematic representation for use to describe how to read out the information recorded on a wobbling structure.
FIG. **3** schematically illustrates a format for an optical disc medium according to a first embodiment.
FIG. **4(a)** is a block diagram illustrating a signal read drive of the first embodiment, and FIG. **4(b)** illustrates signal waveforms in the signal read drive of the first embodiment.
FIG. **5** schematically illustrates a format for another optical disc medium according to the first embodiment.
FIG. **6** schematically illustrates a format for still another optical disc medium according to the first embodiment.
FIG. **7** illustrates a format for an optical disc medium according to a second embodiment.
FIG. **8(a)** is a block diagram illustrating a signal read drive of the second embodiment, and FIG. **8(b)** illustrates signal waveforms in the signal read drive of the second embodiment.
FIG. **9** is a block diagram schematically illustrating a read drive for use to read out information from an optical disc medium according to the present invention.

### BEST MODE FOR CARRYING OUT THE INVENTION

### (EMBODIMENT 1)

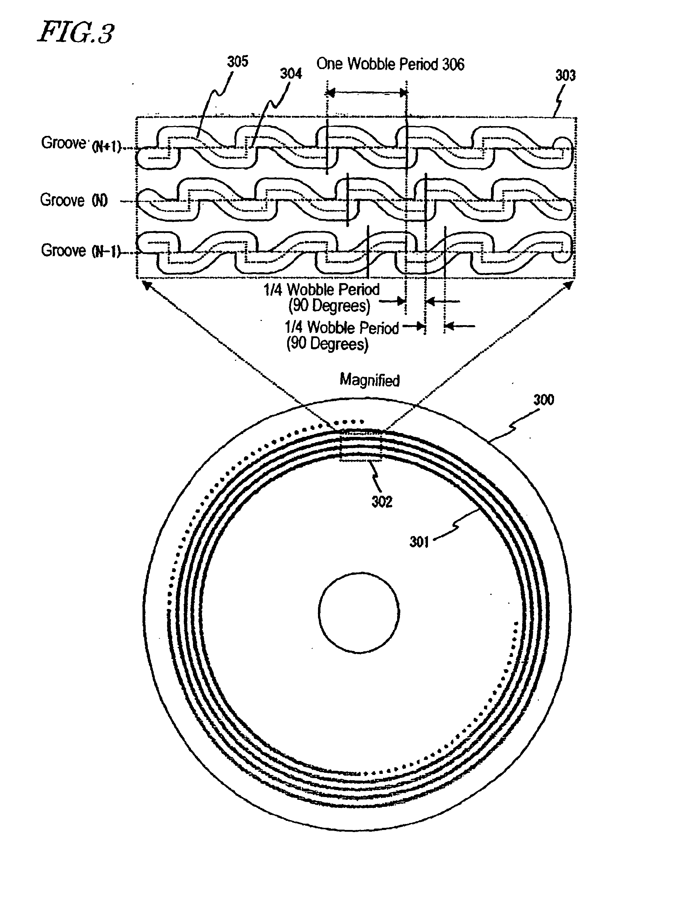

An optical disc medium according to a first embodiment of the present invention will be described with reference to FIG. **3**.

FIG. **3** schematically illustrates a format for an optical disc medium **300** according to the first embodiment of the present invention.

The optical disc medium **300** is compliant with a CAV format in which spiral track grooves **301** have been formed as recording tracks on the recording surface of a substrate. An area **302** included in an arbitrary zone of the optical disc **300** is illustrated as an area **303** to a larger scale. The area **303** includes three mutually adjacent grooves (N-1), (N) and (N+1), where N is a positive integer and indicates a track number.

Each of these grooves has a wobbling structure that includes a sine wave having a single period as its fundamental wave. The interval from one intersection between the average centerline (one-dot chain) **304** of the groove and the centerline curve (dotted line) **305** thereof to another is one half as long as one wobble period (i.e., one period of the fundamental wave) **306**. This wobbling structure is a combination of the local waveforms **100**, **101**, **102** and **103** that have already been described with reference to FIG. **1**.

Each pair of adjacent grooves (N+1) and (N) or (N) and (N-1) is formed so as to have their phases shifted from each other by one-fourth period (i.e., so as to have a phase angle difference of 90 degrees). This relative positional relationship (or phase relationship) is satisfied all over the disc.

This optical disc medium **300** may be made in the following manner, for example.

When the master of the disc is cut, the master is rotated by a CAV method with a clock signal for rotating the master synchronized with a clock signal for a wobble generator. At a frequency at which the wobble has a number (N+1/4) of periods for one revolution of the disc, a groove-recording laser beam is wobbled and modulated. In this example, a sine wave is wobbled and modulated in accordance with a signal for forming rectangular portions having steep disc-outward or disc-inward displacements in response to an address signal representing address information. For example, just by changing the conventional cutting frequency of 100 Hz into 100.25 Hz, the optical disc medium **300** of this embodiment can be made.

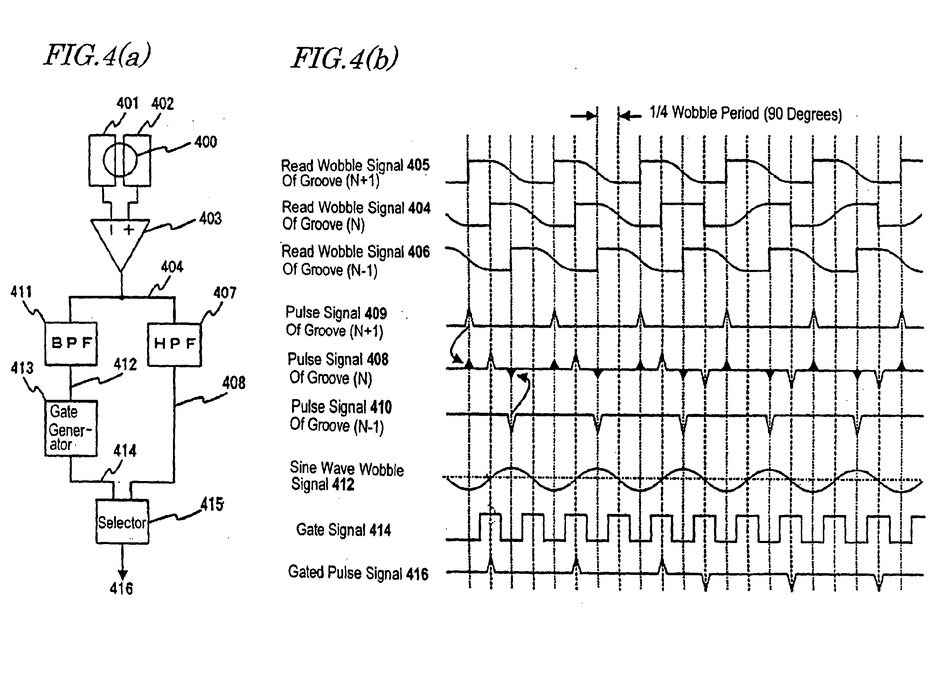

Next, a signal reading method for reading out address information from the optical disc medium **300** will be described with reference to FIGS. **4(a)** and **4(b)**.

FIG. **4(a)** is a block diagram schematically illustrating a signal read drive for use to read out information from the wobbling structure of the optical disc medium **300**. FIG. **4(b)** illustrates signal waveforms at respective parts of the signal read drive.

A reflected part **400** of a laser beam that has been irradiated onto an arbitrary groove (N) of the optical disc medium **300** is received at detectors **401** and **402** that are spaced apart from each other in the disc radial direction. When the intensities of the reflected light that have been detected by the detectors **401** and **402** are subtracted from each other at a differential amplifier **403**, a read wobble signal **404**, representing the wobble shapes, can be obtained.

Next, when the read wobble signal **404** is differentiated by a high-pass filter (HPF) **407**, signal components corresponding to fundamental wave (or sine wave) portions with a smooth waveform are removed and instead only signal components corresponding to rectangular portions with steep gradients are detected as a pulse signal **408** with positive and negative polarities. That is to say, smooth fundamental wave (sine wave) components having a single period are removed. Instead, only signal components, corresponding to high-frequency components superposed on the fundamental wave (i.e., steep gradients), are detected as a signal having two mutually different polarities that correspond to the two directions of displacement (i.e., outer- and inward displacements).

In this case, if a track pitch, i.e., a gap between adjacent grooves, is small, then a crosstalk component enters the pulse signal **408** from an adjacent groove. To make this phenomenon understandable more easily, read wobble signals **405** and **406,** obtained from adjacent grooves (N+1) and (N-1), respectively, and pulse signals **409** and **410**, obtained by differentiating the read wobble signals **405** and **406**, respectively, are illustrated in FIG. **4(b)** along with the pulse signal **408** obtained from the groove (N), although these signals cannot be obtained concurrently. As shown in FIG. **4(b)**, the pulse signals **409** and **410**, obtained when the two tracks adjacent to the groove (N) are read, mix into the pulse signal **408** of the target groove (N) at the positions indicated by the solid triangles.

On the other hand, the bad width of the read wobble signal **404** of the groove (N) is limited by a band-pass filter (BPF) **411** so as to be converted into a smooth sine wave wobble signal **412**. Next, a gate generator **413** generates a gate signal **414** that has a predetermined width at each zero crossing point of the sine wave wobble signal **412**, which corresponds to a node of the sine wave. If the pulse signal **408** of the groove (N) gets selected by a selector **415** only when the gate signal **414** is high, then the unwanted crosstalk components (as indicated by the solid triangles superposed on the pulse signal **408**) are eliminated completely from a gated pulse signal **416**.

As can be seen, even if crosstalk components have been mixed from adjacent grooves into a pulse signal detected from the optical disc medium **300** of this embodiment, the locations of those crosstalk components are always different from those of the signal components of the predetermined signal (i.e., the signal obtained from the groove (N) in this example). More specifically, the phase of those crosstalk components is always shifted from that of the predetermined signal by one-fourth wobble period (i.e., 90 degrees). Accordingly, those crosstalk components are easily removable in response to a gate signal that is generated at every zero crossing point of the wobble signal. In addition, since a wobble signal of one groove and those of adjacent grooves always satisfy predetermined phase relationship, the wobble signals always have constant amplitude and can be detected stably enough.

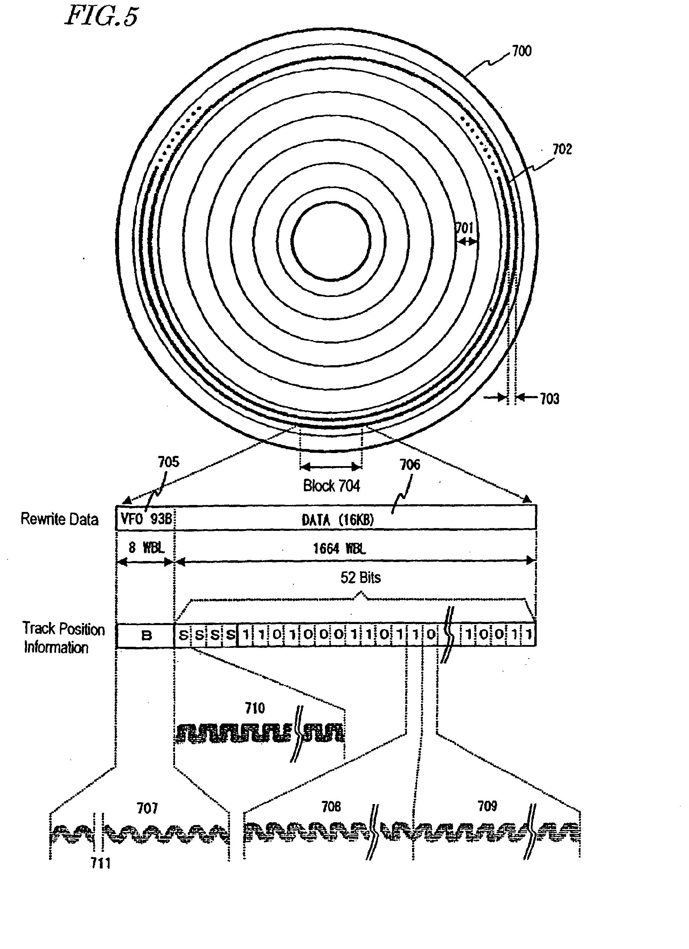

Next, a specific example of an optical disc medium complying with a disc format having the wobbling structure will be described with reference to FIG. **5**.

This optical disc **700** with a diameter of 12 cm includes multiple zones **701** that have been divided in the radial direction thereof. A plurality of spiral grooves **702** has been formed on each of these zones **701**. This optical disc **700** has been formed so that the grooves have a track pitch **703** of 0.32 µm, one wobble period corresponds to a length **703** of about 11.5 µm, and the number of wobbles (i.e., the number of periods of the fundamental wave) for one revolution of the disc is always N + 1/4 (where N is an integer). According to this disc format, the fundamental waves (i.e., wobbles) that make up the respective wobbling structures of each adjacent pair of grooves have their phases shifted from each other by 90 degrees.

This disc has a ZCAV (zoned CAV) structure. In this structure, the closer to the disc outer edge a zone is, the greater the N value of the zone is. However, the N value is set constant within each zone. In this manner, the wobble period length is kept substantially constant. For example, the disc may be divided into approximately 100 (e.g., 93) zones and each of these zones may include approximately 1,000 to 2,000 grooves. The N value may be about 1,000, for example, and this disc may be designed so that the N value increases at a step of about 10 in the zones closest to the disc outer edge.

A rewritable optical disc medium having a recording plane coated with a phase change material will be described as an exemplary optical disc of this embodiment.

A rewrite unit is defined as a block **704,** which is made up of a VFO area **705** provided for read/write synchronization and linking and a user rewritable data area **706.** On the other hand, as for the track position information to be stored as groove shapes, four types of fundamental wobble patterns are formed. The fundamental wobble patterns include: sine wave wobble pattern **707** with no rectangular portions; rectangular wobble pattern **708** with inward displacements; rectangular wobble pattern **709** with outward displacements; and rectangular wobble pattern **710** with inner-and outward displacements. The codes "B". "S", "1" and "0" are allocated to each of these fundamental wobble patterns. "B" means a block mark indicating the beginning of a block, "S" means a sync mark for use to read its address, and "1" and "0" mean an address number and data representing its error detection code.

The sine wave wobble pattern **707** corresponds to eight wobble periods and includes a mirror portion **711** obtained by discontinuing the groove. The mirror portion **711** is easily detectible by a change in the quantity of light totally reflected. The mirror portion **711** may be replaced with a pattern obtained by modulating the frequency, amplitude or phase of the sine wave wobble or by changing the shape thereof.

Each of the other wobble patterns **708, 709** and **710** corresponds to 32 wobble periods so that "S", "1" or "0" is allocated to each unit pattern. In this manner, 52 units (or information of 52 bits) can be stored in total. However, the number of wobble periods allocated to each of these wobble patterns **708**, **709** and **710** is not limited thereto, but may be 36, for example.

The optical disc medium **700** having this format can not only eliminate the adverse effects of crosstalk between adjacent grooves during address reading but also minimize the degree of redundancy that should be provided for pre-storing the address, etc. on the groove. For example, if a violet-emitting laser diode is used, a huge amount of user data of about 25 GB can be recorded on one side of this disc. Furthermore, where an address is recorded as a wobble in this manner, the reflectance does not change locally. Accordingly, even if multiple recording planes are stacked, no crosstalk occurs between adjacent layers. Thus, when a dual-layer disc is formed, for example, the storage capacity thereof can be almost doubled.

Next, applications of this embodiment to another format will be described.

In the example described above, the present invention is applied to a format in which positional information is recorded by combining a plurality of rectangular portions having steep disc-inward or outward displacements. However, according to the present invention, the address information does not have to be represented by those displacements of the wobble. Instead, similar effects are achievable by any other format as long as the wobble shapes are changed in that format. For example, the effects of this invention are still achievable even if the present invention is applied to a format in which the pulse signals **408** through **410** shown in FIG. **4** are used as wobble shapes as they are. In that case, the resultant read wobble signals may be regarded as having been obtained by simply weakening or removing the sine wave wobble signal components (i.e., components representing no information) of the signals **404** through **406**.

By way of example, a situation where the positional information is represented by combining a predetermined phase of a sine waveform portion with a locally inverted phase of another sine waveform portion will be described.

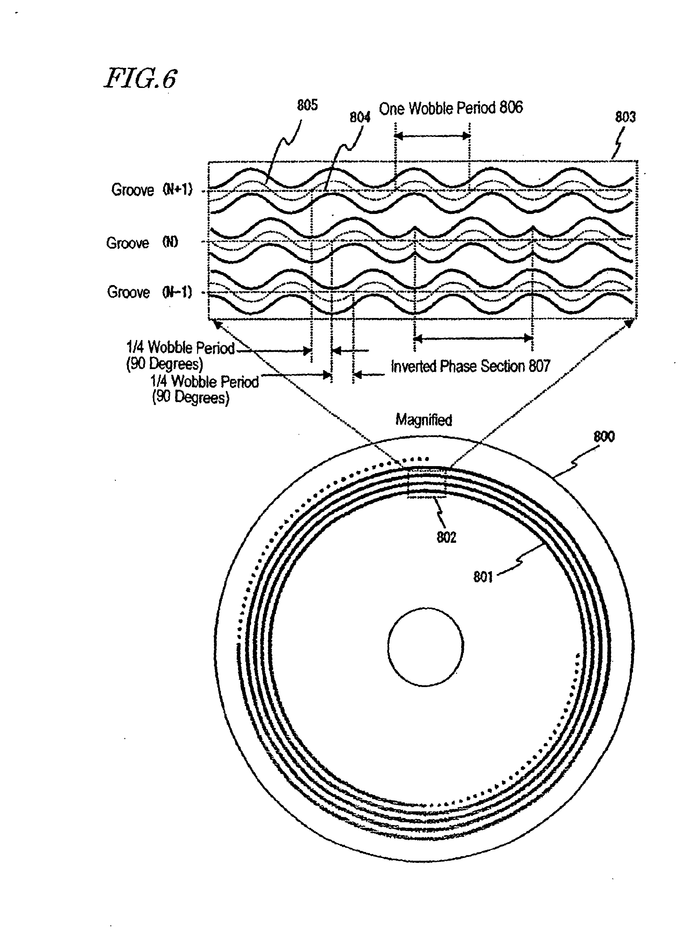

FIG. **6** illustrates a format for still another optical disc medium according to the first embodiment of the present invention.

This optical disc medium **800** is compliant with a CAV format in which spiral track grooves **801** have been formed as recording tracks on the recording surface of a substrate. An area **802** included in an arbitrary zone of the optical disc **800** is illustrated as an area **803** to a larger scale.

Each of these grooves has a wobbling structure that includes a sine wave having a single period as its fundamental wave. The interval from one intersection between the average centerline (one-dot chain) **804** of the groove and the centerline curve (dotted line) **805** thereof to another is one half as long as one wobble period (i.e., one period of the fundamental wave) **806**.

Each pair of adjacent grooves (N+1) and (N) or (N) and (N-1) is formed so as to have their phases shifted from each other by one-fourth period (i.e., so as to have a phase angle difference of 90 degrees). This relative positional relationship (or phase relationship) is satisfied all over the disc.

This optical disc medium **800** is characterized by describing the auxiliary-information (i.e., address information) as inverted and non-inverted wobble phases. More specifically, supposing a wobble that has been formed so as to have a predetermined (non-inverted) phase has an information value of "0", a section **807** of another wobble that has been formed so as to have an inverted phase may be regarded as having an information value of "1" as shown in FIG. **6.** Then, the auxiliary-information can be recorded. One of the advantages that can be obtained by recording the auxiliary-information as inverted and non-inverted phases in this manner is that the information recorded should not be affected so much by unwanted decrease in SNR (which may be caused by overwriting information on the groove) because the information is demodulated by phase detection.

Nevertheless, the information recorded in this way is easily interfered with by the wobbles on the adjacent grooves disadvantageously. More specifically, if the track pitch is narrow, then the wobble on one groove is interfered with by those on the adjacent grooves. However, it greatly depends on the phase relationship between the wobble formed on that groove and those on adjacent grooves how much the former wobble is interfered with by the latter wobbles. That is to say, the interference is either minimized or maximized depending on whether the wobble on the given track groove and those on adjacent grooves are just in phase or of completely opposite phases. Accordingly, as for a format in which the phase is inverted and non-inverted frequently, the interference increases and decreases locally in accordance with the address information described as the phase difference. As a result, the amplitude of the read signal might change considerably.

In view of this potential problem, the wobbles are preferably prepared so that the wobbles on mutually adjacent grooves will have a phase difference of 90 degrees. In that case, even if the phase has changed from 0 degrees into 180 degrees or from 180 degrees into 0 degrees in accordance with the address information, the phase difference between the adjacent grooves changes just from 90 degrees into -90 degrees, for example. As a result, the level of the interference does not change at all.

Thus, according to this embodiment, where the positional information is recorded as a sine wave wobble having a locally inverted phase, the interference from adjacent grooves can always be constant.

In the example described above, the phase difference between the wobble on a given groove (N) and that on its adjacent groove (N-1) or (N+1) is supposed to be 90 degrees. Alternatively, the phases may also be shifted sequentially from the disc inner edge toward the disc outer edge. For example, the phase difference between the wobble on the given groove (N) and that on the inner adjacent groove (N-1) may be +90 degrees while the phase difference between the wobble on the given groove (N) and that on the outer adjacent groove (N+1) may be -90 degrees. In that case, the following secondary effects are expected.

A wobbling structure is originally intended for generating a clock signal being recorded. However, should a track jump have occurred during recording, the information on an adjacent groove might be overwritten with. In this case, if wobbles on mutually adjacent grooves have a phase difference of 90 degrees, then a track jump will suddenly change the phase of the wobble signal by 90 degrees. Accordingly, by detecting this phase change, the occurrence of the track jump can be detected instantaneously. Furthermore, if the wobbles are formed in the above-described manner so as to have their phases shifted by +90 degrees sequentially every time the track number increases by one, then the direction of the track jump (i.e., either outward or inward) can also be detected. As a result, the recovery process can also be quickly performed advantageously.

### (EMBODIMENT 2)

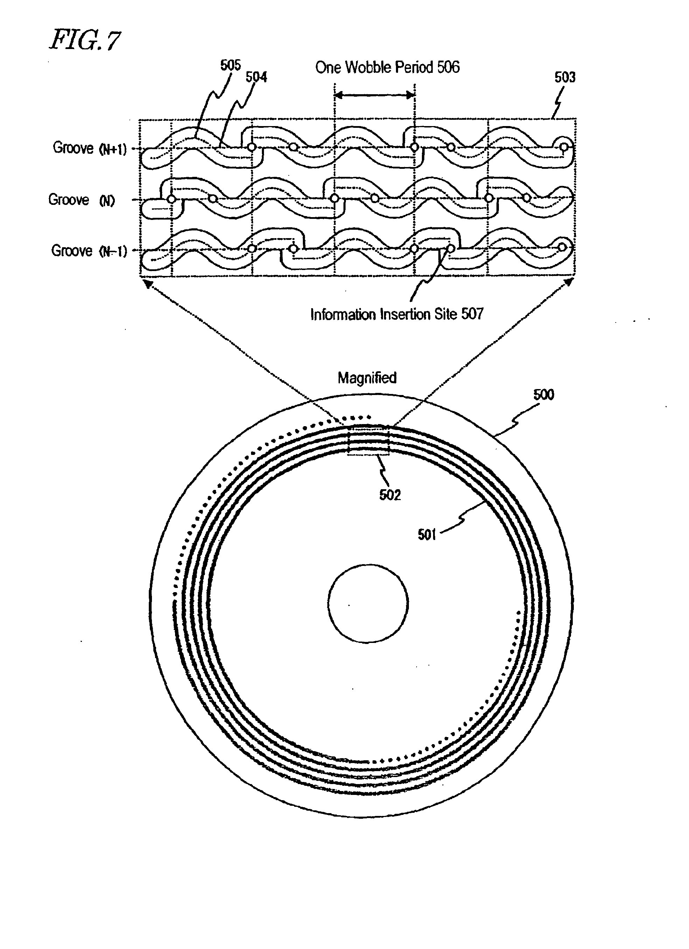

An optical disc medium according to a second embodiment of the present invention will be described with reference to FIG. **7**.

FIG. **7** schematically illustrates a format for an optical disc medium **500** according to the second embodiment of the present invention.

This optical disc medium **500** is compliant with a CAV format in which spiral track grooves **501** have been formed as recording tracks on the recording surface of a substrate. An area **502** included in an arbitrary zone of the optical disc **500** is illustrated as an area **503** to a larger scale. The area **503** includes three mutually adjacent grooves (N-1), (N) and (N+1).

Each of these grooves has a wobbling structure that includes a sine wave having a single period as its fundamental wave. The interval from one intersection between the average centerline (one-dot chain) **504** of the groove and the centerline curve (dotted line) **505** thereof to another is one half as long as one wobble period (i.e., one period of the fundamental wave) **506**.

These adjacent grooves (N+1), (N) and (N-1) are formed so as to have their wobble phases always matched with each other.

Furthermore, this optical disc medium **500** is formed such that a rectangular portion (as indicated by solid circles in FIG. **7**) having a steep disc-inward or outward displacement is inserted every other wobble period and that the number of wobble periods for one revolution of the disc is an odd number.

This optical disc medium **500** may be made in the following manner, for example.

When the master of the disc is cut, the master is rotated by a CAV method with a clock signal for rotating the master synchronized with a clock signal for a wobble generator. At a frequency at which the wobble has an odd number of periods for one revolution of the disc, a groove-recording laser beam is wobbled and modulated. In this example, a sine wave is wobbled and modulated in accordance with a signal for forming rectangular portions having steep disc-outward or disc-inward displacements every other wobble period in response to an address signal representing address information.

In the optical disc medium **500** of this embodiment, any address information inserting site **507** as represented by a rectangular displacement, for example, for one groove and that of its adjacent groove never belong to the same wobble period but appear alternately as shown in FIG. **7**.

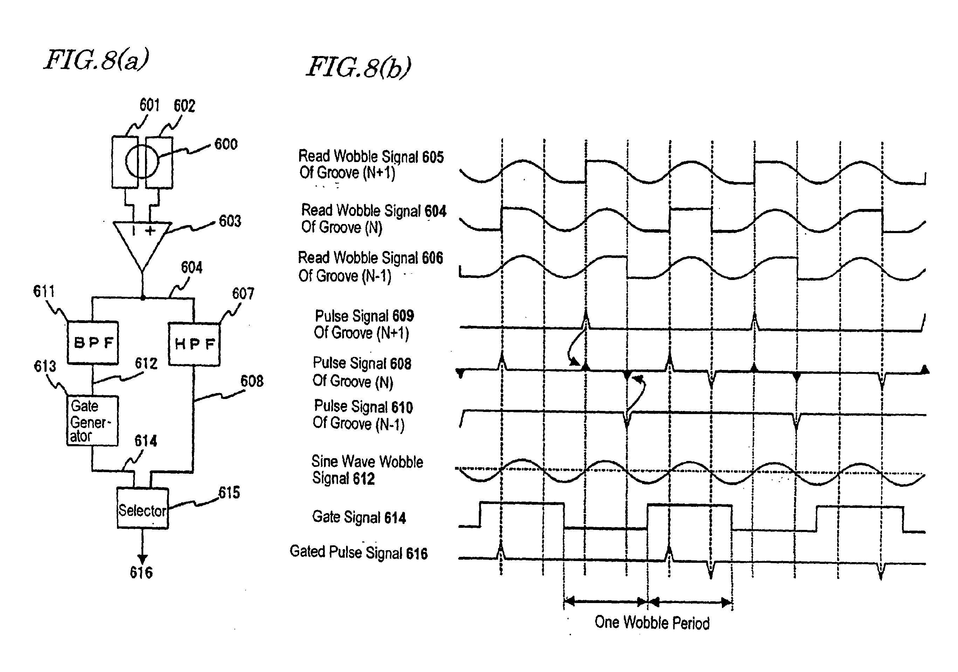

Next, a signal reading method for reading out address information from the optical disc medium **500** will be described with reference to FIGS. **8(a)** and **8(b).**

FIG. **8(a)** is a block diagram schematically illustrating a signal read drive for use to read out information from the wobbling structure of the optical disc medium **500**. FIG. **8(b)** illustrates signal waveforms at respective parts of the signal read drive.

A reflected part **600** of a laser beam that has been irradiated onto an arbitrary groove (N) of the optical disc medium **500** is received at detectors **601** and **602** that are spaced apart from each other in the disc radial direction. When the intensities of the reflected light that have been detected by the detectors **601** and **602** are subtracted from each other at a differential amplifier **603**, a read wobble signal **604**, representing the wobble shapes, is obtained.

Next, when the read wobble signal **604** is differentiated by a high-pass filter (HPF) **607**, signal components corresponding to fundamental wave (or sine wave) portions with a smooth waveform are removed and instead only signal components corresponding to rectangular portions with steep gradients are detected as a pulse signal **608** with positive and negative polarities.

In this case, if a track pitch, i.e., a gap between adjacent grooves, is small, then a crosstalk component enters the pulse signal **608** from an adjacent groove. To make this phenomenon understandable more easily, read wobble signals **605** and **606,** obtained from adjacent grooves (N+1) and (N-1), respectively, and pulse signals **609** and **610,** obtained by differentiating the read wobble signals **605** and **606,** respectively, are illustrated in FIG. **8(b)** along with the pulse signal **608** obtained from the groove (N), although these signals actually cannot be obtained concurrently. As shown in FIG. **8(b),** the pulse signals **609** and **610,** obtained when the two tracks adjacent to the groove (N) are read, mix into the pulse signal **608** of the target groove (N) at the positions indicated by the solid triangles.

On the other hand, the width of the read wobble signal **604** of the groove (N) is limited by a band-pass filter (BPF) **611** so as to be converted into a smooth sine wave wobble signal **612.** Next, a gate generator **613** generates a gate signal 614 that has a predetermined width at every other zero crossing point (i.e., node) of the sine wave wobble signal **612**. If the pulse signal **608** of the groove (N) gets selected by a selector **615** only when the gate signal **614** is high, then the unwanted crosstalk components (as indicated by the solid triangles superposed on the pulse signal **608**) are eliminated completely from a gated pulse signal **616**.

As can be seen, even if crosstalk components have been mixed from adjacent grooves into a pulse signal detected from the optical disc medium **300** of this embodiment, the locations of those crosstalk components are always different from those of the signal components of the predetermined signal (i.e., the signal obtained from the groove (N) in this example). More specifically, those crosstalk components are alternately mixed into the pulse signal every other wobble period. Accordingly, those crosstalk components are easily removable in response to a gate signal generated at every other zero crossing point of the wobble signal. In addition, since a wobble signal of one groove and those of adjacent grooves always satisfy predetermined phase relationship, the wobble signals always have constant amplitude and can be detected stably enough. Furthermore, since the wobble phases of adjacent grooves are completely matched with each other, the interference between wobbles acts in such a manner as to intensify each other. Thus, the wobbles can be detected under a condition that maximizes the amplitude. However, considering the recording density of auxiliary-information, the optical disc medium of the first embodiment is more preferable.

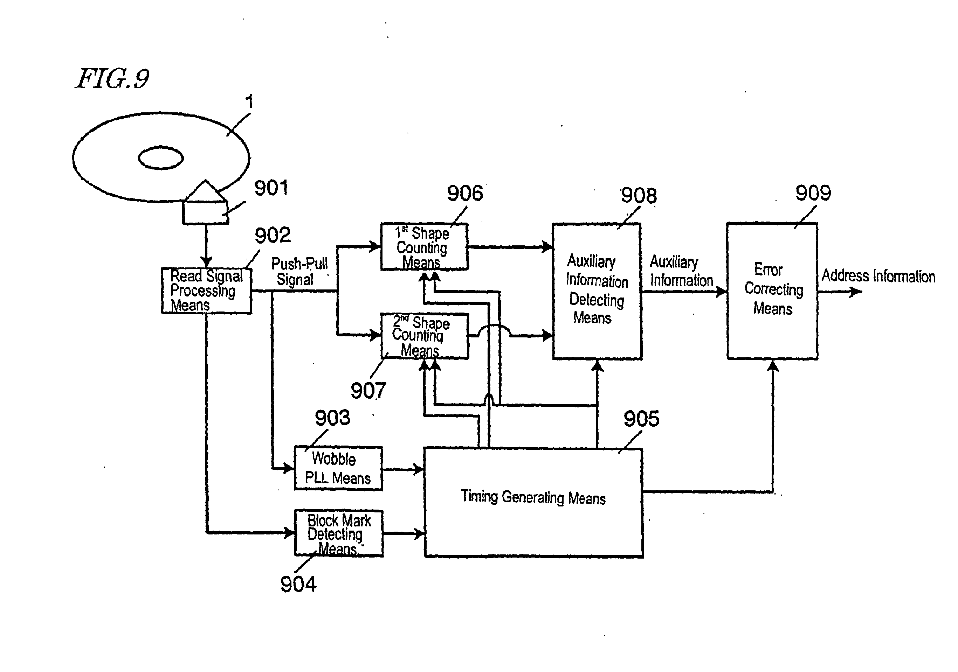

The address information recorded on the optical disc medium of the present invention may be read out by an optical disc drive such as that shown in FIG. **9,** for example.

An optical head **901,** included in this optical disc drive, focuses a light beam onto an optical disc medium 1 and detects the intensity of its reflected light while making the light spot follow the grooves. A read signal processing means **902** subjects the detection signal of the optical head **901** to operation processing, thereby generating a read wobble signal and a fully added signal. A wobble PLL means **903** generates a clock signal having a frequency obtained by multiplying the wobble frequency. A block mark detecting means **904** locates a block mark by comparing the fully added signal to a predetermined value. A timing generating means **905** counts the number of pulses of the clock signal that has been generated by the wobble PLL means **903** from the block mark position (e.g., the beginning of a block) that has been detected by the block mark detecting means **904**, thereby generating a timing signal representing the timing at which the wobble signal should rise or fall, the timing at which the information is subdivided and the timing at which each block is sectioned.

Next, a first shape counting means **906** is reset at the timing at which the information should be subdivided. If the gradient of the push-pull signal generated by the read signal processing means **902** is equal to or greater than a first predetermined value at the timing at which the wobble signal rises in a unit section having a piece of auxiliary-information, then the counting means **906** increments its count by one. On the other hand, if the gradient is less than the first predetermined value, then the counting means 906 does not change its count but holds it. A second shape counting means **907** is also reset at the timing at which the information should be subdivided. If the gradient of the push-pull signal generated by the read signal processing means **902** is equal to or less than a second predetermined value at the timing at which the wobble signal rises in a unit section having a piece of auxiliary-information, then the counting means **907** increments its count by one. On the other hand, if the gradient is greater than the second predetermined value, then the counting means 907 does not change its count but holds it.

Next, a auxiliary-information detecting means **908** compares the count **C1** of the first shape counting means **906** with the count **C2** of the second shape counting means **907** in response to the timing signal that has been generated by the timing generating means **905** to indicate the timing at which the information should be subdivided. If C1≧C2 is satisfied, then the detecting means **908** outputs "1" as the auxiliary-information of the unit section. On the other hand, if C1<C2 is satisfied, then the detecting means **908** outputs "0" as the auxiliary-information of the unit section. In other words, the detecting means **908** decides a given wobble signal as having steep rising displacements or having steep falling displacements by majority. An error correcting means **909** makes an error correction on the auxiliary-information of 32 bits allocated to one block, thereby generating address information.

In the first and second embodiments described above, the present invention has been described as being applied to an optical disc medium complying with a CAV format that adopts zone division. However, the present invention is not limited thereto, but similar effects are also achievable as long as the optical disc medium includes at least one zone complying with the CAV format. For example, the present invention is applicable either to a medium including a single zone compliant with the CAV format or to a medium on which a zone compliant with the CAV format and a zone compliant with a CLV format coexist.

Also, in the embodiments described above, an optical disc medium on which data area positional information is recorded on the wobbling structure has been exemplified. Alternatively, the present invention is also applicable to an optical disc medium on which non-user information (i.e., information other than user information) uniquely allocated thereto is recorded on the wobbling structure when an inner lead-in area recording technique is adopted, for example.

### INDUSTRIAL APPLICABILITY

The present invention provides an optical disc medium that can stabilize the amplitude of a wobble signal even if crosstalk should occur on the disc medium for which a narrow track pitch format is adopted and that can detect the information recorded on its wobbling structure without being affected by the crosstalk. The present invention also provides a signal reading method for reading out the information that has been recorded on the wobbling structure of such an optical disc medium.

The optical disc medium and signal reading method of the present invention can be used very effectively as a large-capacity optical disc medium for a large-capacity video disc recorder and a method of reading the disc.

## Claims

1. An optical disc medium comprising at least one zone on which multiple track grooves are formed in a CAV format,
wherein each said track groove has a wobbling structure made up of a fundamental wave having a single period, information being recorded on the wobbling structure, and
wherein in the at least one zone, the fundamental waves that make up the respective wobbling structures of mutually adjacent ones of the track grooves always have their phases shifted from each other by 90 degrees.

2. The optical disc medium of claim 1, wherein the wobbling structure is made up of a number N+1/4 (where N is a positive integer) periods of the fundamental wave for one revolution of the disc.

3. The optical disc medium of claim 1 or 2, wherein the wobbling structure is a combination of a first shape corresponding to the fundamental wave and a second shape corresponding to a wave obtained by superposing high-frequency components on the fundamental wave.

4. The optical disc medium of one of claims 1 to 3, wherein the first shape is a sine waveform and the second shape is a rectangular waveform.

5. The optical disc medium of claim 1 or 2, wherein the wobbling structure is a combination of a first shape corresponding to the fundamental wave and a second shape obtained by modulating the phase of the first shape.

6. The optical disc medium of claim 5, wherein the first shape is a sine waveform and the second shape is a waveform obtained by inverting the phase of the first shape by 180 degrees.

7. An optical disc medium on which spiral track grooves have been formed so as to have wobbles in a disc radial direction with a constant period and on which information is recorded as the shapes of the wobbles,
wherein in at least one zone thereof comprising a predetermined number of track grooves, the wobbles of mutually adjacent ones of the track grooves always have their phases shifted from each other by 90 degrees.

8. The optical disc medium of claim 7, wherein the wobble shape is a combination of a sine waveform portion, a first rectangular portion having a steep disc-inward displacement, and a second rectangular portion having a steep disc-outward displacement, thereby recording positional information thereon.

9. The optical disc medium of claim 7, wherein the wobble shape is a combination of a first sine waveform portion having a predetermined phase and a second sine waveform portion obtained by inverting the predetermined phase of the first sine waveform portion, thereby recording positional information thereon.

10. An optical disc medium comprising at least one zone on which multiple track grooves are formed in a CAV format, each said track groove having a wobbling structure made up of a fundamental wave having a single period, information being recorded on the wobbling structure,
wherein the wobbling structure is a combination of a first shape corresponding to the fundamental wave and a second shape corresponding to a wave obtained by superposing high-frequency components on the fundamental wave, and
wherein the fundamental wave that makes up the wobbling structure has an odd number of periods for one revolution of the disc, and
wherein in the at least one zone, the fundamental waves that make up the respective wobbling structures of mutually adjacent ones of the track grooves have their phases matched with each other but include the second shape at respective periodic positions that are shifted from each other by one period.

11. The optical disc medium of claim 10, wherein the first shape is a sine waveform and the second shape is a rectangular waveform.

12. An optical disc medium on which spiral track grooves have been formed so as to have wobbles in a disc radial direction with a constant period,
wherein the wobble shape is a combination of a sine waveform portion, a first rectangular portion having a steep disc-inward displacement, and a second rectangular portion having a steep disc-outward displacement, thereby recording positional information thereon, and
wherein in at least one zone thereof comprising a predetermined number of track grooves, the wobbles of mutually adjacent ones of the track grooves have their phases matched with each other, but include the first or second rectangular portion at respective periodic positions that are shifted from each other by one period.

13. A signal reading method for reading out information from an optical disc medium, the optical disc medium comprising at least one zone on which multiple track grooves are formed in a CAV format, each said track groove having a wobbling structure made up of a fundamental wave having a single period, the information being recorded on the wobbling structure, the wobbling structure being a combination of a first shape corresponding to the fundamental wave and a second shape corresponding to a wave obtained by superposing high-frequency components on the fundamental wave, wherein in the at least one zone, the fundamental waves that make up the respective wobbling structures of mutually adjacent ones of the track grooves always have their phases shifted from each other by 90 degrees, the method comprising the steps of:
irradiating the track grooves with a laser beam;
getting light that has been reflected from the optical disc medium detected differentially by a pair of detectors that are spaced apart from each other in a disc radial direction;
generating a sine wave wobble signal by limiting the band width of the differentially detected signals;
generating a gate signal with a predetermined width at a zero crossing point of the sine wave wobble signal;
generating a pulse signal from the second shape by differentiating the differentially detected signals; and
selectively detecting the pulse signal in an interval corresponding to the predetermined width of the gate signal.

14. A signal reading method for reading out information stored from an optical disc medium, the optical disc medium comprising at least one zone on which multiple track grooves are formed in a CAV format, each said track groove having a wobbling structure made up of a fundamental wave having a single period, the information being recorded on the wobbling structure, the wobbling structure being a combination of a first shape corresponding to the fundamental wave and a second shape corresponding to a wave obtained by superposing high-frequency components on the fundamental wave, the fundamental wave that makes up the wobbling structure having an odd number of periods for one revolution of the disc, wherein in the at least one zone, the fundamental waves that make up the respective wobbling structures of mutually adjacent ones of the track grooves have their phases matched with each other but include the second shape at respective periodic positions that are shifted from each other by one period, the method comprising the steps of:
irradiating the track grooves with a laser beam;
getting light that has been reflected from the optical disc medium detected differentially by a pair of detectors that are spaced apart from each other in a disc radial direction;
generating a sine wave wobble signal by limiting the band width of the differentially detected signals;
generating a gate signal with a predetermined width every other period of the sine wave wobble signal;
generating a pulse signal from the second shape by differentiating the differentially detected signals; and
selectively detecting the pulse signal in an interval corresponding to the predetermined width of the gate signal.
